(19) **Europäisches Patentamt**
**European Patent Office**
**Office européen des brevets**

(11) **EP 3 506 071 A1**

(12) **EUROPEAN PATENT APPLICATION**

(43) Date of publication:
**03.07.2019  Bulletin 2019/27**

(51) Int Cl.:
***G06F 3/0482*** (2013.01)

(21) Application number: **17211037.1**

(22) Date of filing: **29.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Doro AB**
**211 20 Malmö (SE)**

(72) Inventor: **Bergdahl, Thomas**
**SE-237 35 Bjärred (SE)**

(74) Representative: **Ström & Gulliksson AB**
**P O Box 4188**
**203 13 Malmö (SE)**

(54) **SCROLLING IN UI WITH AUTO-FOCUS OF FREQUENTLY USED CONTENT**

(57)     A computing device (100) comprises a controller (201) configured to provide a user interface which is capable of providing access for a user (1) to a set of selectable content items (454). The controller (201) is further configured to cause the user interface to display (501) a first subset (460a) of the content items (454) in a selection area (460a-b) and allow scrolling (502) of the selection area (460a-b) to cause display (503) of a second subset (460b) of the content items (454) in the selection area (460a-b). After the scrolling of the selection area (460a-b), the controller (201) is configured to automatically focus (504, 505) on one or more target content items (456) within the second subset currently displayed in the selection area (460a-b). This automatic focus is user context dependent. A method for use in a computing device and a computer program product are also disclosed.

```
┌─────────────────────────────────────┐
│              500                     │
│ Providing access for a user to a     │
│ set of selectable content items      │
└─────────────────────────────────────┘
                 │
                 ▼
┌─────────────────────────────────────┐
│              501                     │
│ Displaying a first subset of the     │
│ content items in a selection area    │
└─────────────────────────────────────┘
                 │
                 ▼
┌─────────────────────────────────────┐
│              502                     │
│ Detecting scrolling action           │
└─────────────────────────────────────┘
                 │
                 ▼
┌─────────────────────────────────────┐
│              503                     │
│ Displaying a second subset of the    │
│ content items in the selection area  │
└─────────────────────────────────────┘
                 │
                 ▼
┌─────────────────────────────────────┐
│              504                     │
│ Algorithm determines target(s) of    │
│ automatic focus in the second        │
│ subset based on one or more user     │
│ context dependent factors            │
└─────────────────────────────────────┘
                 │
                 ▼
┌─────────────────────────────────────┐
│              505                     │
│ Focusing on the one or more target   │
│ content items in the second subset   │
└─────────────────────────────────────┘
```

*Fig. 8*

## Description

## Technical Field

The present invention generally relates to user interfaces of computing devices, and more particularly to a computing device comprising a controller configured to provide a user interface, said user interface being capable of providing access for a user to a set of selectable content items, wherein the controller is further configured to cause the user interface to display a first subset of the content items in a selection area, and to allow scrolling of said selection area to cause display of a second subset of the content items in the selection area.

## Background

With the constantly expanding amount of content available online, scrolling has become a frequent routine for many users of computing devices. Whether it be on a mobile phone, a personal computer, wearable devices or other computing devices, users are constantly bombarded with updates, options and information. The most common way of processing all of this content is through scrolling, for example scrolling through web pages, a social network newsfeed or flipping through pages of app icons on a mobile phone.

However, not all users are comfortable processing so much information at once, limiting the speed of use and general usability of scrollable content. Some user categories are especially impacted by this, e.g. inexperienced or handicapped users. With the popularization of smart-phones and other wearable devices such as smart-watches, screens are getting smaller, further aggravating the problem.

Previous attempts to alleviate these problems have involved changing the amount of content displayed at once or rearranging the content to move the most relevant content items within reach of less scrolling. A drawback of such solutions is that resizing and rearranging content can be confusing for technically inept or inexperienced users.

## Summary

It is accordingly an object of the invention to eliminate or alleviate at least some of the problems referred to above. Preferably, these problems are eliminated or alleviated in a homogeneous way across different computing devices and software implementations. It is therefore a further object of the invention to eliminate or alleviate the problems in a simple and intuitive way, which can be implemented in a plurality of different computing devices and user scenarios.

One aspect of the present invention is a computing device comprising a controller configured to provide a user interface. Said user interface is capable of providing access for a user to a set of selectable content items. The controller is further configured to cause the user interface to display a first subset of the content items in a selection area, and to allow scrolling of said selection area to cause display of a second subset of the content items in the selection area. After said scrolling of the selection area, the user interface will automatically focus on one or more target content items within the second subset currently displayed in the selection area, said automatic focus being user context dependent.

A selection area is a static part of a display's presentation area (such as a window, frame, main part of or the entire presentation area), in which in every instance a subset of content items such as app icons or text links are displayed (unless there are only a few content items in total; in such a case it may be that all contents items can be displayed in the selection area). The selection area is hence not a separate physical object, but an area of the display containing the subset of content items currently displayed. The selection area is changed by scrolling, which may change the subset of content items currently displayed, but may not change the order of the content items.

According to one embodiment, at least one content item differs between said first and second subsets of the content items.

According to a second embodiment, the user interface is configured to always focus on one or more selectable content items.

According to another embodiment, the controller is configured to automatically focus on said one or more target content items in accordance with an algorithm that comprises one or more user context dependent factors.

According to yet another embodiment, one of said one or more user context dependent factors of said algorithm is how frequently the content items have been selected in the past.

According to one further embodiment, one of said one or more user context dependent factors of said algorithm is a current time.

According to yet one further embodiment, one of said one or more user context dependent factors of said algorithm is a current location of the user.

According to one more embodiment, one of said one or more user context dependent factors of said algorithm is weights and/or sensitivity values that can be adjusted by the user.

According to yet one more embodiment, the device is connected to a communication network and is configured to allow adjustments to the algorithm via the network.

According to another further embodiment, said set of selectable content items are ordered in a one or two dimensional list.

According to yet another further embodiment, said list is scrollable horizontally and/or vertically.

According to yet another one further embodiment, the scrolling can be in discrete increments or smooth scrolling.

Another aspect of the present invention is a method for use in a computing device comprising a controller configured to provide a user interface. Said user interface is capable of providing access for a user to a set of selectable content items. The controller is further configured to cause the user interface to display a first subset of the content items in a selection area, and to allow scrolling of said selection area to cause display of a second subset of the content items in the selection area. After said scrolling of the selection area, the user interface will automatically focus on one or more target content items within the second subset currently displayed in the selection area, said automatic focus being user context dependent.

According to one embodiment, at least one content item differs between said first and second subset of the content items.

According to a second embodiment, the controller is configured to automatically focus on one or more target content items in accordance with an algorithm that comprises one or more user context dependent factors.

According to a third aspect of the invention is a computer program product comprising program instructions which when read and executed by a processing unit causes performance of the method above.

The automatic focus of content items will help the user find the content most relevant to them, without disturbing the content itself. This allows for a simplified and intuitive guiding of a user.

The focusing can be achieved in many different ways. As used in this document, "focus" and "focusing" mean making an indication of the or each target content item in the user interface which is different in some way compared to other content items of the second subset, such that the or each target content item will be noticeable to the user and facilitate a subsequent selection thereof. The focusing of the or each target content item may be done by way of highlighting, for example by changing its color, font, size, frame, background, icon, animation, or any combination thereof. Different focusing can be more or less clear as well as more or less distracting and the most beneficial embodiment will depend on the context.

The scrolling as such can also be achieved in different ways, which may mean that the automatic focusing needs to adapt to the scrolling type and speed in order to provide a helpful guide in all circumstances. The present invention can, without limitation, be applied for fixed-size scrolls (such as page scrolls) and well as seamless scrolls (such as dragging of a scroll list, or swipe scroll caused by a swipe gesture on a touch screen, including decelerating scroll where the end or extent of the scroll depends on the magnitude of the scroll actuation (e.g. speed and/or length of the swipe gesture). The terms "scroll", "scrolling" and "scrolling action" are used as synonyms in this document.

According to these aspects of the invention, the above and other objects of the invention are achieved, in full or at least part by a device, method and computer program product as defined by claim 1, 13 and 16, respectively.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

**Brief Description of the Drawings**

Objects, features and advantages of embodiments of the invention will appear from the following detailed description, reference being made to the accompanying drawings, in which:

Fig. 1 shows an exemplifying environment in which the invention may be exercised.
Fig. 2 shows the internal software and hardware structure of a computing device according to an embodiment of the invention.
Fig. 3 shows an arrangement of some main elements of a computing device according to an embodiment of the invention.
Figs. 4a-b show an embodiment of the computing device according to the invention.
Figs. 5a-b show an embodiment of the computing device according to the invention.
Figs. 6a-b show an embodiment of the computing device according to the invention.
Figs. 7a-b illustrates how the selection area may comprise different subsets in a set of selectable content items.
Fig. 8 shows a flowchart according to an embodiment of the invention.
Fig. 9 shows a flowchart according to an embodiment of the invention.
Fig. 10 shows a flowchart according to an embodiment of the invention.
Fig. 11 shows a flowchart according to an embodiment of the invention.

**Detailed Description**

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

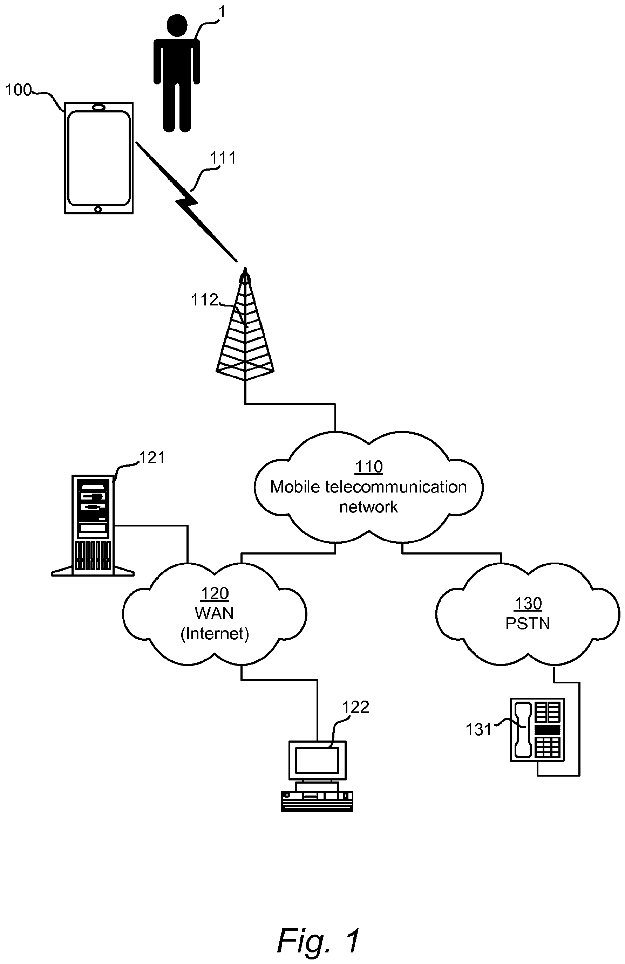

Before turning to a detailed description of the disclosed embodiments of the communication device according to the invention, an exemplifying environment in which such embodiments may be exercised will now be briefly described with reference to Fig. 1.

In Fig. 1, a computing device in the form of a mobile communication terminal 100 is part of a cellular telecommunications system. A user 1 of the mobile communication terminal 100 may use different telecommunications services, such as voice calls, Internet browsing, video calls, data calls, facsimile transmissions, still image transmissions, video transmissions, electronic messaging, and e-commerce. The invention is however not limited to any particular set of services.

The mobile communication terminal 100 may connect to a mobile telecommunication network 110 over a radio link 111 and a base station 112. The mobile communication terminal 100 and the mobile telecommunication network 110 may comply with any commercially available mobile telecommunication standard, for instance (without limitation) GSM, UMTS, LTE, LTE Advanced, D-AMPS, CDMA2000, FOMA and TD-SCDMA. Embodiments of the mobile communication terminal 100 will be described in more detail with reference to the following drawings.

A public switched telephone network (PSTN) 130 is connected to the mobile telecommunication network 110. Telephone terminals of PSTN subscribers may connect to the PSTN 130. In Fig. 1, a stationary telephone 131 is indicated as a mere example of this.

The mobile telecommunication network 110 is operatively associated with a wide area data network 120, which may be the Internet or a part thereof. Server computers 121 and client computers 122 may be connected to the wide area data network 120 to allow communication with the mobile terminal 100.

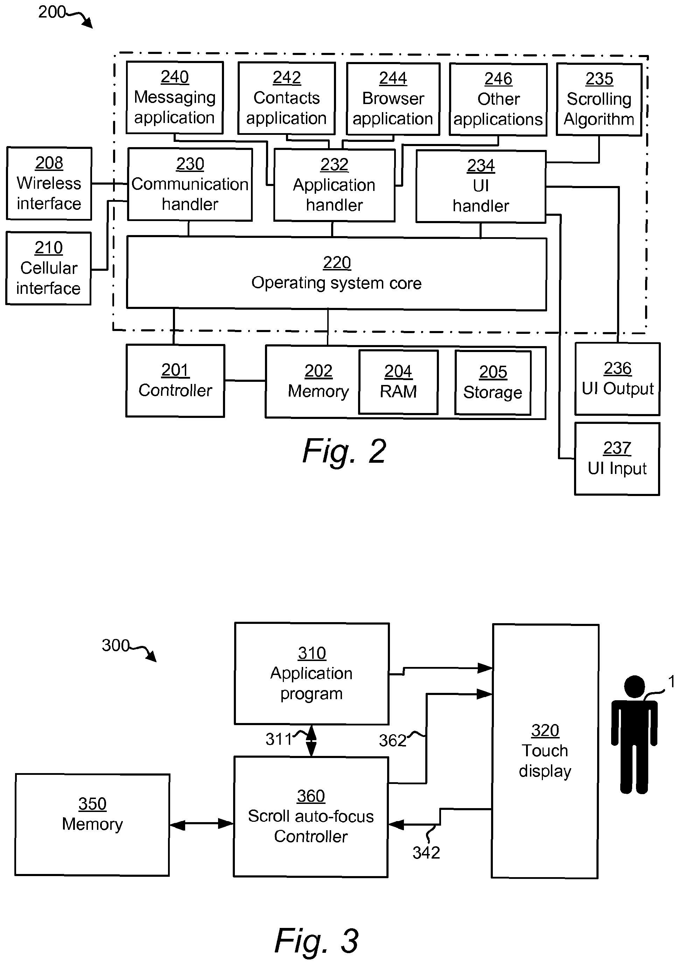

The internal software and hardware structure of a computing device 200, for instance the mobile communication terminal 100 according to the embodiment shown in Fig. 1, will now be described with reference to Fig. 2. Software components are indicated within a dash-dotted frame, whereas hardware components are outside of this frame. The computing device 200 has a controller 201 being responsible for general device operations. Any commercially available central processing unit (CPU) or digital signal processor (DSP), or other programmable electronic logic device such as an application-specific integrated circuit (ASIC) or field-programmable gate array (FPGA), may be used to implement the controller 201. The controller 201 has associated memory 202 which includes a work memory (RAM) 204 and a non-volatile storage memory 205, for instance in the form of EEPROM, flash memory (e.g. memory card), hard disk, or any combination thereof. The controller 201 uses the memory 202 for different purposes, for instance for storing file objects as well as data and program instructions for the software in the mobile communication terminal.

The software includes an operating system core 220 on a lower level, application programs 240-246 on an upper level for interaction with the user, and drivers and handlers for the hardware and the application programs on an intermediate level. The intermediate level includes a UI handler 234 which forms a user interface towards the user (such as user 1 in Fig. 1) by controlling UI output 236 (such as touch display 320 in Fig. 3) and receiving instructions and/or data from the user from the UI input 237 (such as touch display 320 in Fig. 3), as well as other I/O devices which may be included in the computing device. The UI handler 234 further includes a scrolling algorithm 235, which the UI handler 234 is configured apply after scrolling of content items is concluded. The algorithm uses user context dependent factors to find the content item that is deemed by the algorithm to be most interesting for the user, so that the UI handler 234 can highlight these on the UI output 236 and so that the user can more easily find what he or she is are looking for.

An application handler 232 controls the application programs 240-246, which may include a messaging (e.g. SMS, MMS or email) application 240, a contacts application 242, a browser (e.g. www, html) application 244, as well as various other applications 246, such as a call application for voice or video calls, a music player application, a video player application, a calendar application, a file handling, a control panel or settings application, a camera application, a video game, a word processing application, a spreadsheet application, a drawing application, a slideshow presentation application, a fitness application, etc.

The software also includes various modules, protocol stacks, drivers, etc., which are commonly designated as communication handler 230 and which provide communication support for a cellular interface 210 and, optionally, a wireless interface for Bluetooth, WLAN, NFC and/or IrDA (commonly designated as 208 in Fig. 2). The cellular interface 208 comprises an internal or external antenna as well as appropriate radio circuitry for establishing and maintaining a wireless link to a base station (e.g. the link 111 and base station 112 in Fig. 1). The radio circuitry comprises a radio transmitter and receiver (transceiver; TX/RX), formed for instance by band pass filters, amplifiers, mixers, local oscillators, low pass filters, AD/DA converters, etc.

With reference to Fig. 3, an arrangement 300 of some main elements of a computing device will now be described. The description is made with exemplifying reference to the embodiment 100/200 of Fig. 1 and 2, where the computing device is implemented as a smart phone terminal 100/200; however, the skilled person readily realizes that the arrangement 300 could also be applied to other embodiments. The skilled person would also realize that the arrangement can also be applied to other scrolling instances than the scrolling in an application program 310 in the example of Fig. 3.

As seen in Fig. 3, the arrangement 300 comprises a scroll auto-focus controller 360 which can be invoked whenever an application program 310 (such as one of the application programs 240-246 of Fig. 2) concludes a scrolling action. The scroll auto-focus controller 360 may be implemented in software and is advantageously a part of the UI handler 234 of Fig. 2. The scroll auto-focus controller 360 is operatively connected 342 to a touch sensitive display 320 to detect when a user 1 performs a scrolling action. After the scrolling action is concluded, the scroll auto-focus controller 360 is configured to apply the scrolling algorithm 235 of Fig. 2 (possibly stored in the memory 350) and use it to find a target content item for focusing, which the scroll auto-focus controller 360 in conjunction 311 with the application program 310 will direct 362 the touch display 320 to focus on.

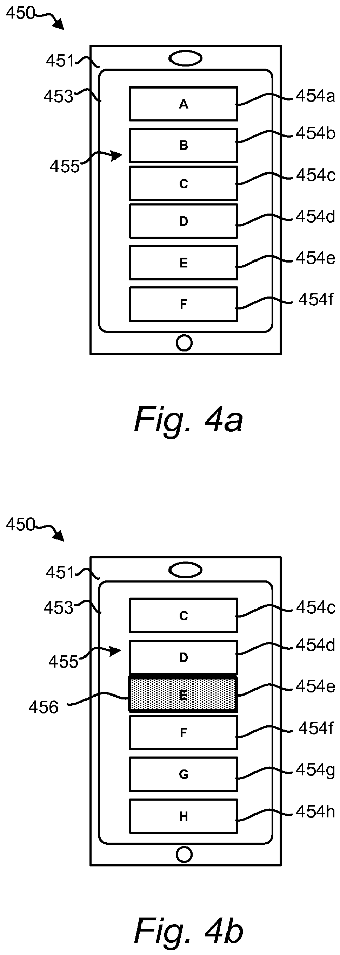

Reference is now made to Fig. 4a-b. In one embodiment of the computing device according to the invention, the set of selectable content items is a one dimensional list 455 in an application running on a smart-phone 450. The display 453 of the smart-phone 450 shows a list 455 of selectable content items in the form of icons 454a-h, where only a subset of the list's icons are displayed at a time. Before the scrolling action (Fig. 4a) a first subset of icons 454a-f are displayed. After the scrolling action (Fig. 4b) a second subset of icons 454c-h are displayed. After the scrolling action, content item 454e has been targeted by the scrolling algorithm 235 of Fig. 2 and the controller 201 has caused the user interface to highlight 456 the targeted content item 454e. The skilled person will note that it is irrelevant if the targeted content item 454e was displayed already in the first subset or if it would be deemed the most relevant for the user also in the first subset, the target is only determined after the scrolling action is concluded and only with regards to the second subset of content items displayed at that time.

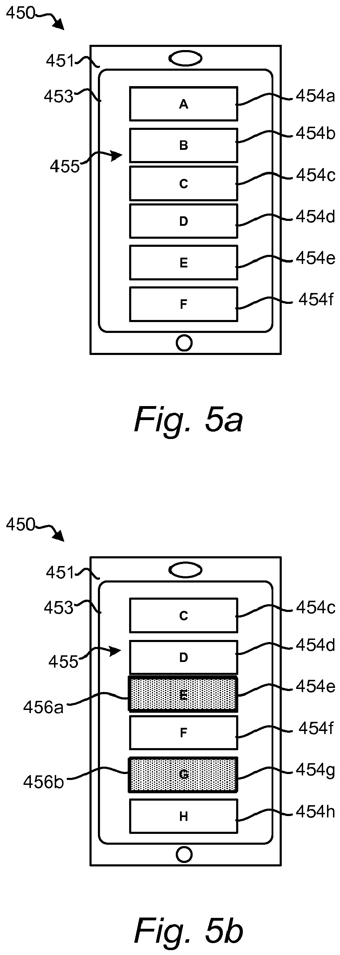

Fig. 5a-b illustrates another embodiment of the computing device according to the invention, where the set of selectable content items is a one dimensional list 455 in an application running on a smart-phone 450. The display 453 of the smart-phone 450 shows a list 455 of selectable content items in the form of icons 454a-h, where only a subset of the list's icons are displayed at a time. Before the scrolling action (Fig. 5a) a first subset of icons 454a-f are displayed. After the scrolling action (Fig. 5b) a second subset of icons 454c-h are displayed. After the scrolling action, content items 454e and 454g have been targeted by the scrolling algorithm 235 of Fig. 2 and the controller 201 has caused the user interface to highlight 456a, 456b the targeted content items 454e and 454g. The skilled person will note that the amount of content items that are targeted by the scrolling algorithm 235 of Fig. 2 can be adjusted as well as both fixed and variable depending on certain threshold parameters.

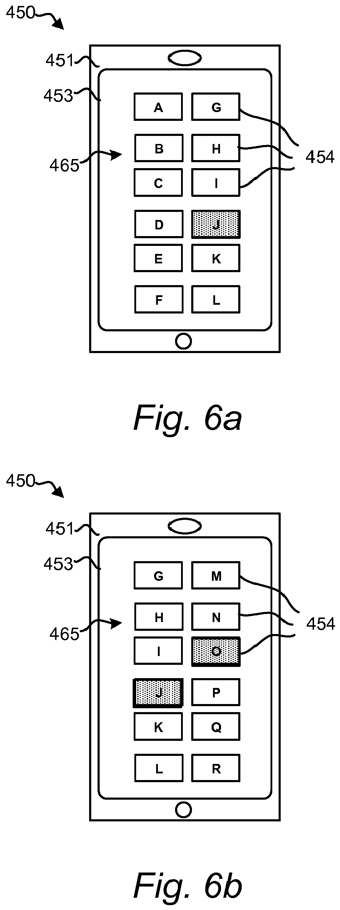

With reference to Fig. 6a-b still another embodiment of the invention is shown. In this embodiment, the set of selectable content items is a two dimensional list 465 of selectable icons 454 representing applications on a dashboard. In this embodiment, the UI handler 234 of Fig. 2 is configured to always show at least one content item in focus, where the target of this focus is determined by the scrolling algorithm 235 of Fig. 2. Before the scrolling action (Fig. 6a) icons of the subset A-L are displayed and icon J is highlighted. After the scrolling action (Fig. 6b) icons of the subset G-R are displayed and icons J and O are highlighted. After scrolling, the scrolling algorithm 235 of Fig. 2 has targeted icons J and O for focusing and even though icon J was highlighted in the previous subset that makes no difference for the analysis of the new subset of icons after the scrolling action has concluded. The skilled person can also note that the amount of content items targeted by the scrolling algorithm 235 of Fig. 2 has changed between Fig. 6a and Fig. 6b. This is not because the parameters of the algorithm have changed, but rather because in the subset of Fig. 6b, more than one content item was deemed by the algorithm as relevant for the user, for example by both items reaching above a certain threshold of relevance.

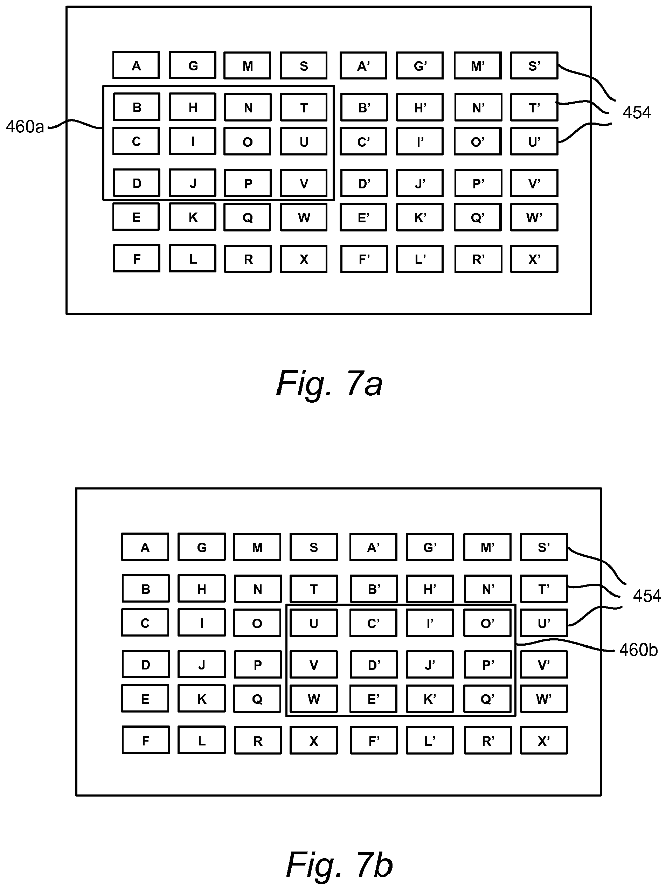

Fig. 7a-b show an embodiment of how the selection area 460a-b defines different subsets in a set of selectable content items 454. The set of content items is a two dimensional list of icons A-X'. Before the scrolling action (Fig. 7a) the selection area 460a defines a first subset of icons (B, C, D, H, I, J, N, O, P, T, U, V) which are to be displayed, for example on the UI output 236 in Fig. 2 or the touch display 320 of Fig. 3. After the scrolling action (Fig. 7b) the selection area 460b has changed and now defines a second subset of icons (U, V, W, C', D', E', I', J', K', O', P', Q') which are to be displayed and at least one, in this case ten, content items differ.

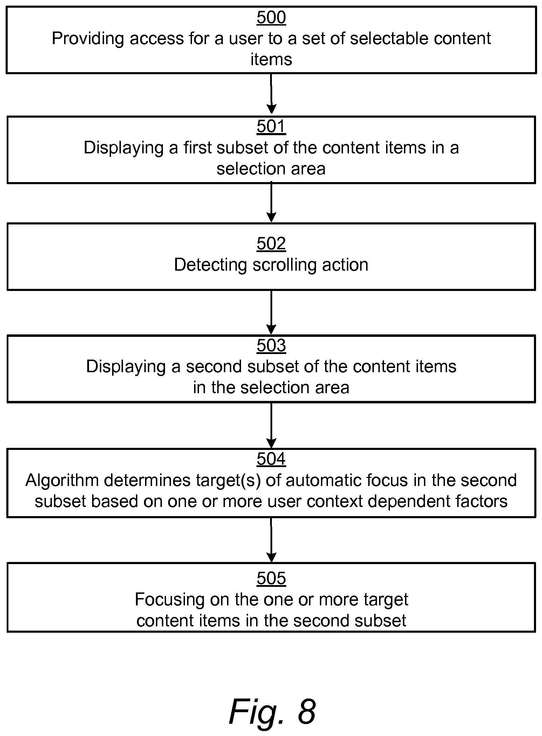

Reference is now made to the method according to Fig. 8, which may advantageously run on a mobile or stationary computing device having a touch-sensitive user interface (such as a mobile communication terminal, tablet computer, information kiosk or vending machine), or alternatively on a personal computer-type computing device having a conventional user interface comprising a display screen and a cursor control device like a computer mouse and/or a keyboard. The computing device starts by providing access for a user to a set of selectable content items 500 by displaying them on the display screen of the computing device. The computing device may define a selection area that is suitable for the display size and resolution and limit the content items displayed to a first subset within the selection area 501. When the computing device has detected a scrolling action 502, the contents of the selection area changes. In response, the computing device then displays a second subset of content items in the selection area 503. Next, the computing device uses an algorithm to determine one or more targets of automatic focus in the second subset based on user context dependent factors 504. Then, the computing device focuses on the one or more target content items in the second subset 505 by highlighting them on the display screen. The skilled person will realize that the order of some of the steps of the above method is interchangeable, for example switching 500 and 501 as well as moving 503 last.

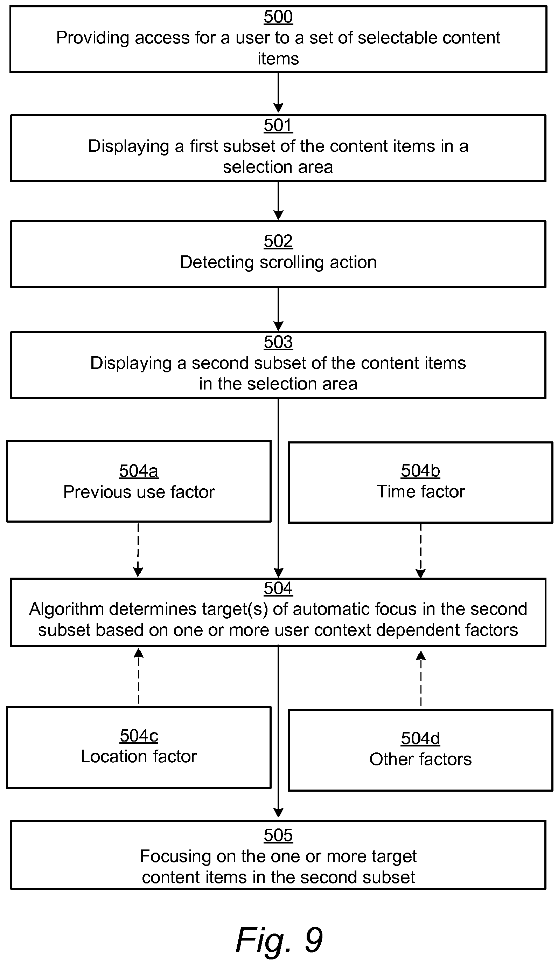

An alternative embodiment is shown in Fig. 9. This embodiment, too, may advantageously run on a mobile or stationary computing device having a touch-sensitive user interface (such as a mobile communication terminal, tablet computer, information kiosk or vending machine), or alternatively on a personal computer-type computing device having a conventional user interface comprising a display screen and a cursor control device like a computer mouse and/or a keyboard. The computing device starts by providing access for a user to a set of selectable content items 500 by displaying them on the display screen of the computing device. The computing device may define a selection area that is suitable for the display size and resolution and limit the content items displayed to a first subset within the selection area 501. When the computing device has detected a scrolling action 502, the content of the selection area changes. The computing device then displays a second subset of content items in the selection area 503. Next, the computing device uses an algorithm to determine one or more targets of automatic focus in the second subset based on user context dependent factors 504.

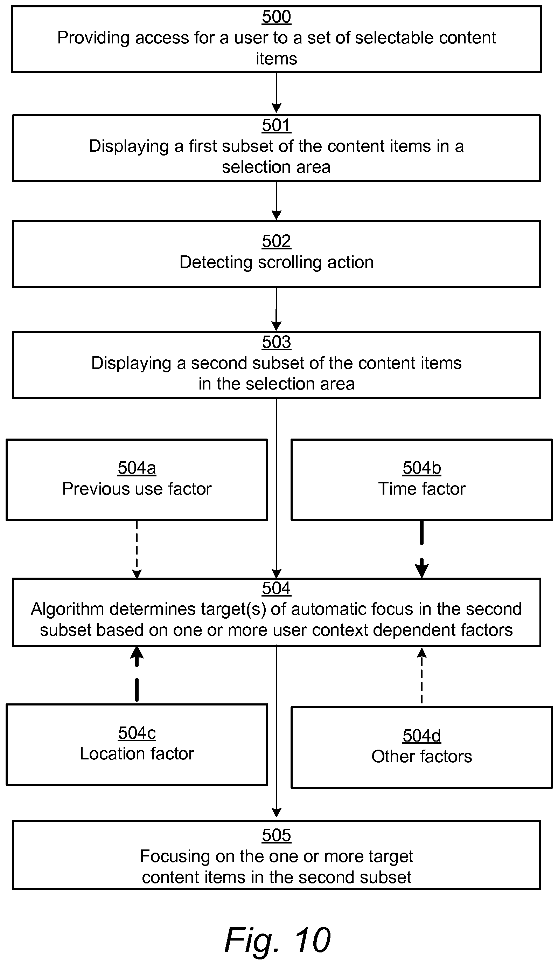

Another alternative embodiment is shown in Fig. 10. This embodiment, too, may advantageously run on a mobile or stationary computing device having a touch-sensitive user interface (such as a mobile communication terminal, tablet computer, information kiosk or vending machine), or alternatively on a personal computer-type computing device having a conventional user interface comprising a display screen and a cursor control device like a computer mouse and/or a keyboard. The computing device starts by providing access for a user to a set of selectable content items 500 by displaying them on the display screen of the computing device. The computing device may define a selection area that is suitable for the display size and resolution and limit the content items displayed to a first subset within the selection area 501. When the computing device has detected a scrolling action 502, the contents of the selection area changes. The computing device then displays a second subset of content items in the selection area 503. Next, the computing device uses an algorithm to determine one or more targets of automatic focus in the second subset based on user context dependent factors 504. The user context dependent factors can be two or more of the factors 504a-d as explained above. All of the factors used will impact the target of the automatic focus in the second subset, but depending on user preference or dynamic settings, the different factors will be weighted more or less heavily in relation to each other, as shown in Fig. 10 with differences in arrow thickness. For instance, a user may request that the time factor will be more important than the other factors when determining the target of the automatic focus, perhaps also limiting that priority to certain times of day and/or certain locations. After the algorithm has determined one or more targets, the computing device focuses on the one or more target content items in the second subset 505 by highlighting them in the display on the display screen.

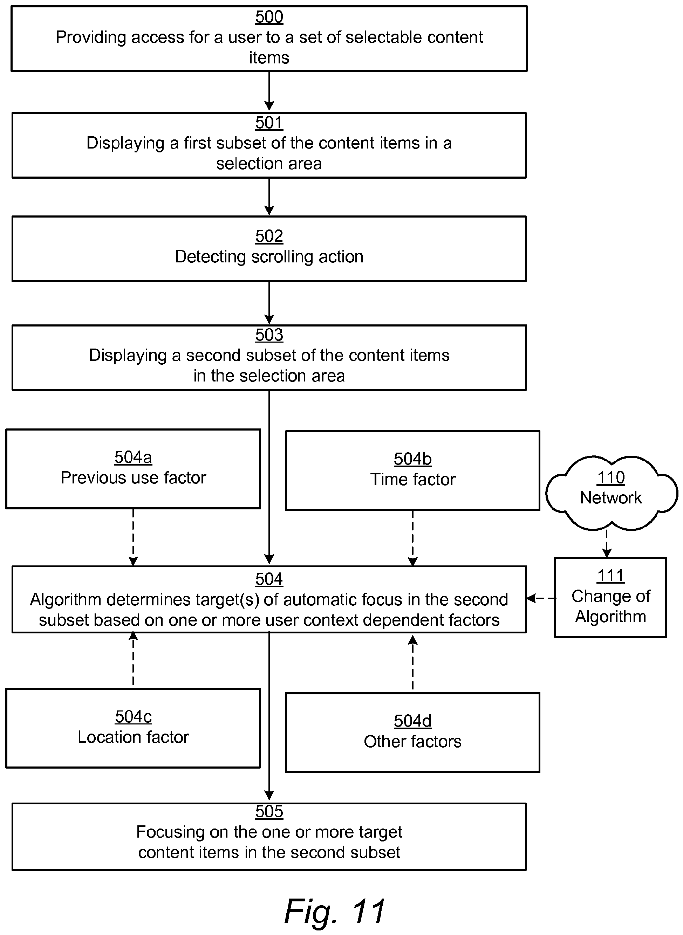

Yet another embodiment can be seen in Fig. 11. This embodiment, too, may advantageously run on a mobile or stationary computing device having a touch-sensitive user interface (such as a mobile communication terminal, tablet computer, information kiosk or vending machine), or alternatively on a personal computer-type computing device having a conventional user interface comprising a display screen and a cursor control device like a computer mouse and/or a keyboard. The computing device starts by providing access for a user to a set of selectable content items 500 by displaying them on a screen with an associated input interface, in this case a computer screen connected to a keyboard and mouse. The computing device may define a selection area that is suitable for the display size and resolution and limit the content items displayed to a first subset within the selection area 501. When the computing device has detected a scrolling action 502, the contents of the selection area changes. The computing device then displays a second subset of content items in the selection area 503. Next, the computing device uses an algorithm to determine one or more targets of automatic focus in the second subset based on user context dependent factors 504. The user context dependent factors can be one or more of the factors 504a-d as explained above. The computing device will also be connected to a network 110 which can change the algorithm or the factors used 111. This can be used either to update the algorithm in order to incorporate further development, or to make use of other users' experiences to be able to apply multi-user context dependent factors. This can be as simple as changing some default values for certain currently popular content items or as complicated as predicting a user's preferences based on data gathered from other users. After the algorithm has determined one or more targets, the computing device focuses on the one or more target content items in the second subset 505 by highlighting them in the display on the display screen.

In advantageous embodiments, the user context dependent factors, upon which the determination is based of which target content item(s) in the second subset of content items to automatically focus on after scrolling, can be one or more of the following factors:

- A previous use factor 504a. The previous use factor 504a may, for instance, uses data on how frequently specific content items have been selected in the past, which may also have a time dependency, thus rating content items that have been popular more recently over items that have been popular historically.

- A time factor 504b. The time factor 504b may, for instance, use the time of day to prioritize content items that are more frequently used at specific times, such as public transportation and traffic content during commuting hours or work-related content during business hours, or use the weekday to only prioritize work-related content during workdays or the date to prioritize holiday related content, or use seasonal data to prioritize content relevant for the current season.

- A location factor 504c. The location factor 504c may, for instance, use location data of a GPS, WiFi, BLE, LTE or Cell ID based positioning system in order to prioritize content relevant to the user's location, such as shopping deals in a shopping mall, restaurant recommendations in the user's vicinity or tourism information if the user is at a foreign location.

The skilled person will note that there are many more possible factors 504d, such as a relation factor, which can be used to prioritize content that is frequently used in conjunction with other content; and a mood factor, which can use data such as the intensity of button presses or face recognition to prioritize items that have been used previously in certain moods. There can also be application context factors that function using user context, such as an embodiment used in a dishwasher prioritizing certain washing programs depending on the content of the dishwasher as well as the user's preferences, or an embodiment used in a smart-phone that uses information from the user's calendar to prioritize certain content. After the algorithm has determined one or more targets, the computer focuses on the one or more target content items in the second subset 505 by highlighting them in the display on the computer screen.

The algorithm used to determine the one or more targets of automatic focus in the second subset based on user context dependent factors can be implemented in a multitude of different ways. The equation below shows a simple, non-complete algorithm to illustrate the concepts of the invention and the algorithm's role in the invention. However, as is readily understood by those skilled in the art, other embodiments of the algorithm are equally possible within the scope of the present invention. In the equation, $W_{1,2,3}$ are weights, $U, T, L$ are factors and P is the resulting preference value. The different factors will be based on different user context dependent data and normalized to a comparable number, for example a rating between 1 and 10. The weights will be used to change the sensitivity of the different factors, for example if a user wants factor $U$ to be more important than factor $L$, $W_1$ will be larger than $W_3$, in order for factor $U$ to have more of an impact than $L$ on $P$. $P$ is the resulting preference value and can be used to compare different selectable content items with each other in order to target the item with the highest P-value or alternatively all items with a P-value above a certain threshold.

$$W_1 \cdot U + W_2 \cdot T + W_3 \cdot L = P$$

It is to be noticed that some embodiments uses only a single user context dependent factor.

The invention has been described above in detail with reference to embodiments thereof. However, as is readily understood by those skilled in the art, other embodiments are equally possible within the scope of the present invention, as defined by the appended claims.

**Claims**

1. A computing device (100) comprising:

    a controller (201) configured to provide a user interface, said user interface being capable of providing access for a user (1) to a set of selectable content items (454), wherein the controller (201) is further configured to cause the user interface to:

        display a first subset (460a) of the content items (454) in a selection area (460a-b);
        allow scrolling of said selection area (460a-b) to cause display of a second subset (460b) of the content items (454) in the selection area (460a-b); and
        after said scrolling of the selection area (460a-b), automatically focus on one or more target content items (456) within the second subset currently displayed in the selection area (460a-b), said automatic focus being user context dependent.

2. The computing device (100) as defined in claim 1, wherein at least one content item (454) differs between said first (460a) and second (460b) subsets of the content items (454).

3. The computing device (100) as defined in claim 1 or 2, wherein the user interface is configured to always focus on one or more selectable content items (454).

4. The computing device (100) as defined in any preceding claim, wherein the controller (201) is configured to automatically focus on said one or more target content items (456) in accordance with an algorithm (235) that comprises one or more user context dependent factors.

**5.** The computing device (100) as defined in claim 4, wherein one of said one or more user context dependent factors of said algorithm (235) is how frequently the content items (454) have been selected in the past.

**6.** The computing device (100) as defined in claim 4 or 5, wherein one of said one or more user context dependent factors of said algorithm (235) is a current time.

**7.** The computing device (100) as defined in any of claims 4 to 6, wherein one of said one or more user context dependent factors of said algorithm (235) is a current location of the user (1).

**8.** The computing device (100) as defined in any of claims 4 to 7, wherein one of said one or more user context dependent factors of said algorithm (235) is weights and/or sensitivity values that can be adjusted by the user (1).

**9.** The computing device (100) as defined in any of claims 4 to 8, wherein the device (100) is connected to a communication network (110, 120) and is configured to allow adjustments to the algorithm (235) via the network (110, 120).

**10.** The computing device (100) as defined in any preceding claim, wherein said set of selectable content items (454) are ordered in a one or two dimensional list (455, 465).

**11.** The computing device (100) as defined in claim 10, wherein said list is scrollable horizontally and/or vertically.

**12.** The computing device (100) as defined in any preceding claim, wherein the scrolling can be in discrete increments or smooth scrolling.

**13.** A method for use in a computing device (100) which comprises:

a controller (201) configured to provide a user interface, said user interface being capable of providing access for a user (1) to a set of selectable content items (454), said method comprising:

displaying (501) a first subset (460a) of the content items (454) in a selection area (460a-b);
allowing scrolling (502) of said selection area (460a-b) to cause displaying (503) of a second subset (460b) of the content items (454) in the selection area (460a-b); and
after said scrolling of the selection area (460a-b), automatically focusing (504, 505) on one or more target content items (456) within the second subset currently displayed in the selection area (460a-b), said automatic focusing being user context dependent.

**14.** The method for use in a computing device (100) as defined in claim 13, wherein at least one content item (454) differs between said first (460a) and second (460b) subset of the content items (454).

**15.** The method for use in a computing device (100) as defined in claim 13 or 14, wherein the controller (201) is configured to automatically focus on one or more target content items (456) in accordance with an algorithm (235) that comprises one or more user context dependent factors.

**16.** A computer program product comprising program instructions which when read and executed by a processing unit (201) causes performance of the method of any of claims 13 to 15.

*Fig. 1*

200⤹

| | | | | |
|---|---|---|---|---|
| **240** Messaging application | **242** Contacts application | **244** Browser application | **246** Other applications | **235** Scrolling Algorithm |

| **208** Wireless interface | **230** Communication handler | **232** Application handler | **234** UI handler |
|---|---|---|---|

| **210** Cellular interface |
|---|

**220** Operating system core

| **201** Controller | **202** Memory | **204** RAM | **205** Storage |
|---|---|---|---|

| **236** UI Output |
|---|

| **237** UI Input |
|---|

## Fig. 2

300⤹

**310** Application program

311

362

**320** Touch display

1

**350** Memory

**360** Scroll auto-focus Controller

342

## Fig. 3

Fig. 4a

Fig. 4b

450

451
453

455

A — 454a
B — 454b
C — 454c
D — 454d
E — 454e
F — 454f

*Fig. 5a*

450

451
453

455

456a

456b

C — 454c
D — 454d
E — 454e
F — 454f
G — 454g
H — 454h

*Fig. 5b*

Fig. 6a

Fig. 6b

| A | G | M | S | A' | G' | M' | S' |
|---|---|---|---|---|---|---|---|
| B | H | N | T | B' | H' | N' | T' |
| C | I | O | U | C' | I' | O' | U' |
| D | J | P | V | D' | J' | P' | V' |
| E | K | Q | W | E' | K' | Q' | W' |
| F | L | R | X | F' | L' | R' | X' |

460a    454

## Fig. 7a

| A | G | M | S | A' | G' | M' | S' |
|---|---|---|---|---|---|---|---|
| B | H | N | T | B' | H' | N' | T' |
| C | I | O | U | C' | I' | O' | U' |
| D | J | P | V | D' | J' | P' | V' |
| E | K | Q | W | E' | K' | Q' | W' |
| F | L | R | X | F' | L' | R' | X' |

454    460b

## Fig. 7b

**500**
Providing access for a user to a set of selectable content items

↓

**501**
Displaying a first subset of the content items in a selection area

↓

**502**
Detecting scrolling action

↓

**503**
Displaying a second subset of the content items in the selection area

↓

**504**
Algorithm determines target(s) of automatic focus in the second subset based on one or more user context dependent factors

↓

**505**
Focusing on the one or more target content items in the second subset

*Fig. 8*

**500**
Providing access for a user to a set of selectable content items

**501**
Displaying a first subset of the content items in a selection area

**502**
Detecting scrolling action

**503**
Displaying a second subset of the content items in the selection area

**504a**
Previous use factor

**504b**
Time factor

**504**
Algorithm determines target(s) of automatic focus in the second subset based on one or more user context dependent factors

**504c**
Location factor

**504d**
Other factors

**505**
Focusing on the one or more target content items in the second subset

*Fig. 9*

```
┌─────────────────────────────────────────────────┐
│                      500                         │
│   Providing access for a user to a set of        │
│          selectable content items                │
└─────────────────────────────────────────────────┘
                        │
                        ▼
┌─────────────────────────────────────────────────┐
│                      501                         │
│   Displaying a first subset of the content       │
│          items in a selection area               │
└─────────────────────────────────────────────────┘
                        │
                        ▼
┌─────────────────────────────────────────────────┐
│                      502                         │
│            Detecting scrolling action            │
└─────────────────────────────────────────────────┘
                        │
                        ▼
┌─────────────────────────────────────────────────┐
│                      503                         │
│   Displaying a second subset of the content      │
│          items in the selection area             │
└─────────────────────────────────────────────────┘
```

┌──────────────────────┐      ┌──────────────────────┐
│         504a         │      │         504b         │
│   Previous use factor│      │     Time factor      │
└──────────────────────┘      └──────────────────────┘

```
┌─────────────────────────────────────────────────┐
│                      504                         │
│   Algorithm determines target(s) of automatic    │
│   focus in the second subset based on one or      │
│   more user context dependent factors            │
└─────────────────────────────────────────────────┘
```

┌──────────────────────┐      ┌──────────────────────┐
│         504c         │      │         504d         │
│   Location factor    │      │    Other factors     │
└──────────────────────┘      └──────────────────────┘

```
┌─────────────────────────────────────────────────┐
│                      505                         │
│   Focusing on the one or more target content      │
│          items in the second subset              │
└─────────────────────────────────────────────────┘
```

*Fig. 10*

**500**
Providing access for a user to a set of selectable content items

**501**
Displaying a first subset of the content items in a selection area

**502**
Detecting scrolling action

**503**
Displaying a second subset of the content items in the selection area

**504a**
Previous use factor

**504b**
Time factor

**110**
Network

**504**
Algorithm determines target(s) of automatic focus in the second subset based on one or more user context dependent factors

**111**
Change of Algorithm

**504c**
Location factor

**504d**
Other factors

**505**
Focusing on the one or more target content items in the second subset

*Fig. 11*

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 632 119 A1 (DORO AB [SE]) 28 August 2013 (2013-08-28) * paragraph [0045] - paragraph [0048]; figures 5c, 5d * ----- | 1-16 | INV. G06F3/0482 |
| X | US 2013/132896 A1 (LEE SEUNG-SOO [KR] ET AL) 23 May 2013 (2013-05-23) * paragraph [0102] - paragraph [0106]; figure 8d * * paragraph [0051] - paragraph [0052] * ----- | 1-16 | |

TECHNICAL FIELDS
SEARCHED      (IPC)

G06F
G06Q

The present search report has been drawn up for all claims

| Place of search | Date of completion of the search | Examiner |
|---|---|---|
| The Hague | 31 May 2018 | de Ronde, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 506 071 A1

**ANNEX TO THE EUROPEAN SEARCH REPORT
ON EUROPEAN PATENT APPLICATION NO.**

EP 17 21 1037

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2018

| Patent document cited in search report | | Publication date | Patent family member(s) | | Publication date |
|---|---|---|---|---|---|
| EP 2632119 | A1 | 28-08-2013 | EP | 2632119 A1 | 28-08-2013 |
| | | | US | 2015012885 A1 | 08-01-2015 |
| | | | WO | 2013127795 A2 | 06-09-2013 |
| US 2013132896 | A1 | 23-05-2013 | CN | 103136324 A | 05-06-2013 |
| | | | KR | 20130056672 A | 30-05-2013 |
| | | | US | 2013132896 A1 | 23-05-2013 |

EPO FORM P0459

For more details about this annex : see Official Journal of the European Patent Office, No. 12/82